# EUROPEAN PATENT APPLICATION

(11) **EP 4 106 155 A1**
(43) Date of publication of application: **21.12.2022**
(21) Application number: 22178259.2
(22) Date of filing: 09.06.2022
(51) Int. Cl.: H02K 7/06, H02K 49/10

(54) **A MAGNETIC MOTOR**

(30) Priority: 18.06.2021 SI 202100129
(71) Applicant: Zupancic, Marjan, 1290 Grosuplje (SI)
(72) Inventor: Zupancic, Marjan, 1290 Grosuplje (SI)
(74) Representative: Patentni Biro AF d.o.o.

(57) **Abstract**

The present invention belongs to the field of motors, more precisely to the field of motors with permanent magnets. The present invention relates to a magnetic motor with improved pole changing and an operation method of said motor.

The essence of the invention is in that the orientation of permanent magnets of the rotor is vertical, i.e., N-S or S-N, which in presence of a horizontally oriented permanent magnet N-S or S-N creates attraction or repulsion. Upon change of the magnetic field induced by movement of the horizontal permanent magnet, which is mounted on a movable holder and can be moved into the field of one of vertical permanent magnets arranged on the rotor, thus causing attraction and/or repulsion, which leads to rotation of the rotor or the axis of the motor, respectively. The magnetic motor according to the invention can be a rotary motor or a linear motor, wherein the rotor of the first starts to rotate upon movement of the permanent magnet, while in the linear motor the axis of the motor moves towards one of the ends to which the permanent magnet is moving. In all magnetic motors, continued rotation or movement requires change of the pole in the correct moment, which is in the present invention enabled with the additional, movable permanent magnet.

## Description

### Field of the invention

The present invention belongs to the field of motors, more precisely to the field of motors with permanent magnets. The present invention relates to a magnetic motor with improved pole changing and an operation method of said motor.

### Background of the invention and the technical problem

Magnetic motors with permanent magnets for creating torque are based on physical properties of electromagnetism enabled by said permanent magnets, which are installed or attached into the rotor of the motor or its surface. Their operation is based on the fact that upon application of a starting energy supplied by an external source, rotation of the rotor is enabled with attractive and repulsive forces between magnets. In all electromotors the pole must be changed in the right moment, in order to allow continuous rotation. The same must be ensured also in embodiments with permanent magnets in rotor and stator. Orientation of magnetic poles on the rotor may be changed with electromagnets, with positioning of permanent magnets in the stator, with use of a shutter and similar. In such motors, uneven rotation with vibrations or jolts may occur during the rotor rotation due to the constant overcoming of repulsive and attractive forces.

The technical problem, which is solved by the present invention, is how to design a magnetic motor with permanent magnets that will have an improved changing of magnetic pole. The aim of the invention is smooth motor operation with high efficiency.

Patent application US2020127510 describes a rotor for an electrical machine includes a rotor body and an axis of revolution which extends in an axial direction and about which the rotor body is rotatable. The rotor further includes an outer casing surface which delimits the rotor body, at least one pole arrangement, and a movement mechanism for the at least one pole arrangement. The movement mechanism is designed such that the at least one pole arrangement is movable about a rotation axis which is oriented substantially parallel to the axis of revolution of the rotor.

Documents GB2485217 and GB2485301 disclose an electric motor comprising a stator with a plurality of permanent magnets and a plurality of electromagnets and a rotor having a rotation axis with respect to the stator. The stator cover has a plurality of magnetic parts and is located adjacent to the stator and is arranged to move relatively to the stator. Magnetic parts of the cover can be moved between positions from or towards permanent magnets and cover the adjacent electromagnets. Movement of the stator cover enables control of efficiency of the electric motor, which can be used in vehicles or industrial machines.

Patent application WO2009084197 relates to a highly efficient synchronous motor with permanent magnets, which has magnetic poles of individual phases arranged separately in plurality in the circumferential direction with respect to the axis of rotation, and the stator magnetic-poles are formed by making at least one of them movable in the circumferential direction with respect to the axis of rotation.

Patent application WO2005053139 discloses a brushless permanent magnet electric machine with a fixed radial air gap is operated to a much higher speed than normal maximum speed by the reduction in effective magnet pole strength. Permanent magnets are supported on the inner surface of an axially movable cylindrical shell. A plurality of magnetic poles provided with wire coils are supported on a stationary cylindrical member cooperate with the permanent magnets on the axially movable cylindrical shell.

All mentioned solutions differ from the present invention in the manner of changing the pole of the magnetic motor, which is essential for ensuring continuous rotation or movement, respectively.

### Description of the solution to the technical problem

The technical problem is solved as defined in patent claims. The essence of the invention is in that the orientation of permanent magnets of the rotor is vertical, i.e., N-S or S-N, which in presence of a horizontally oriented permanent magnet N-S or S-N creates attraction or repulsion. Upon change of the magnetic field induced by movement of the horizontal permanent magnet, which is mounted on a movable holder and can be moved into the field of one of vertical permanent magnets arranged on the rotor, thus causing attraction and/or repulsion, which leads to rotation of the rotor or the axis of the motor, respectively. The magnetic motor according to the invention can be a rotary motor or a linear motor, wherein the rotor of the first starts to rotate upon movement of the permanent magnet, while in the linear motor the axis of the motor moves towards one of the ends to which the permanent magnet is moving. In all magnetic motors, continued rotation or movement requires change of the pole in the correct moment, which is in the present invention enabled with the additional, movable permanent magnet.

The magnetic motor will be described in further detail based on exemplary embodiments and figures, which show:
- Figure 1a: Schematic view of the rotary magnetic motor according to embodiment I
- Figure 1b: Plan view of the rotary magnetic motor according to embodiment I
- Figure 2: Schematic view of the linear magnetic motor according to embodiment II

The rotary magnetic motor according to embodiment I comprises:
- housing of the motor, on which a rotor and other components of the motor are mounted,
- the rotor,
- at least two vertical permanent magnets arranged on the rotor, wherein the shapes and material of the permanent magnets are arbitrary,
- at least one horizontal permanent magnet arranged on a holder, which is movable with means for movement, the latter being a linear motor, a pneumatic cylinder, or any other suitable element, which is arranged to move the permanent magnet from the circumference of the rotor towards its centre and back in order to ensure repulsion and attraction forces and consequently rotor rotation,
- an absolute rotary encoder or encoder arranged on the rotor arranged to sense the position of permanent magnets in the rotor, wherein the detected positions are sent to a control unit for start, operation and stopping of the motor,
- the control unit, which comprises a suitably programmed microprocessor, which controls the movement means and thus moves the horizontal permanent magnet based on positions of permanent magnets on the rotor and at least one horizontal permanent magnet determined by the encoder,
- an axle in the centre of the rotor, which transfers the created torque onto a user in any known manner.

The rotary magnetic motor has a bottom part of the housing 4 provided with a fixedly installed bearing 4a on which circular frame 1a of the rotor 1 is rotatably installed, said rotor 1 being provided with four cylindrically shaped permanent magnets 2 installed in four cylindrical holes equally distributed along the circle. In an upper part of the frame 1a an axis 3 is installed coaxially with the bearing 4a. On a right part of the housing 4 rectangular basis is attached in a fixed manner, wherein to said basis a holder 4b of the bearing 4c is mounted. A supporting element 4b' shaped approximately as a large letter L is attached to the holder 4b in a fixed manner. The vertical part of the supporting element 4b' a holder of the linear motor 8 with a built-in absolute actuator 81 is mounted. In the axis X1 the shaft 8a of the linear motor is connected to the shaft 7 with a joint, said shaft being installed through the linear bearing 4c. The other end of the shaft 7 is provided with a holder 5 of the permanent magnet 6, which is above one of the permanent magnets 2 located in axis X. The shaft 8a of the linear motor and the shaft 7 are in coordinate axis X1, while the drive shaft 3 is in the coordinate axis Y. The absolute encoder 10 is a sensor, which is used for transformation of a controlled value into an electric signal, the latter is via a printed circuit and clamps connected to a microprocessor in the control unit 9, which is a part of the control unit 9, which is together with the absolute actuator 81 installed in the linear motor 8. The main purpose of the absolute encoder 10 is measurement of rotation angle of one of the permanent magnets 2 during rotation of the shaft 3. The absolute encoder 10 is installed on the housing 1a of the rotor 2 near or adjacent to one of the magnets 2.

The encoder 10 is electronically connected to the control unit 9, which controls the absolute actuator 81 and consequently the linear motor 8, which is arranged to move the magnet 6 left and right. The control unit 9 comprises the microprocessor, which is in accordance with geometry of positions of permanent magnets 2, horizontal permanent magnet 6 and encoder 10 programmed to control the actuator 81 arranged to continuously move the magnet 6 left and right. Beginning of operation of the magnetic motor is initiated with a START button, which sends a signal to the actuator 81, which activates the linear motor 8, which then moves the permanent magnet 6 into position right from one of the permanent magnets 2. This movement is sensed by the absolute encoder 10, which via the controller 9 and the actuator 81 triggers movement of the liner motor 8 axis into right. Then, the permanent magnet 2 and the movable magnet 6 are one above the other, which causes rotation of the magnet 2 around the axis in the counter-clockwise direction. Movements of the magnet 6 left and right and vice-versa due to rotation of magnets 2 around the vertical axis occur with the same rate as the movement of the magnet 6. The axle 3 is due to the relatively fast movement of the magnet above the magnet 2 relatively quickly rotates.

In the housing 1a of the rotor 1 more than for permanent magnets 2 may be provided. Magnets 2 are always in pairs and can be 6, 8, 10, 12 or more depending on the size of the rotor 1. All magnets 2 have orientation N-S or S-N depending on the orientation of the magnet 6.

On the holder 5 at least one permanent magnet 6 or more are installed, wherein all have orientation N-S or S-N, depending on the orientation of magnets 2 in the rotor 1.

For linear movement of the additional movable magnet 6 and thus change of magnetic field with regards to the permanent magnets 2 in the rotor 1, an electric linear motor is preferably used. The holder 5 of the movable magnet 6 may be attached directly to the axis of the linear motor 8, if the latter is chosen as the movement means. The number of linear motors with permanent magnets, the holder of the magnet and the axis is the same as the number of magnets arranged in the circumference of the rotor.

Orientation of permanent magnets arranged on the rotor may be any, N-S or S-N, wherein all magnets have the same orientation. Similarly, the linearly movable permanent magnet has N-S or S-N orientation. In case of N-S orientation of the additional movable magnet, the rotor magnets must be oriented N-S. In case of S-N orientation of the movable magnet, the rotor magnets must have S-N orientation. The microprocessor in the control unit is programmed based on orientation of all permanent magnets in the rotor and the movable magnet.

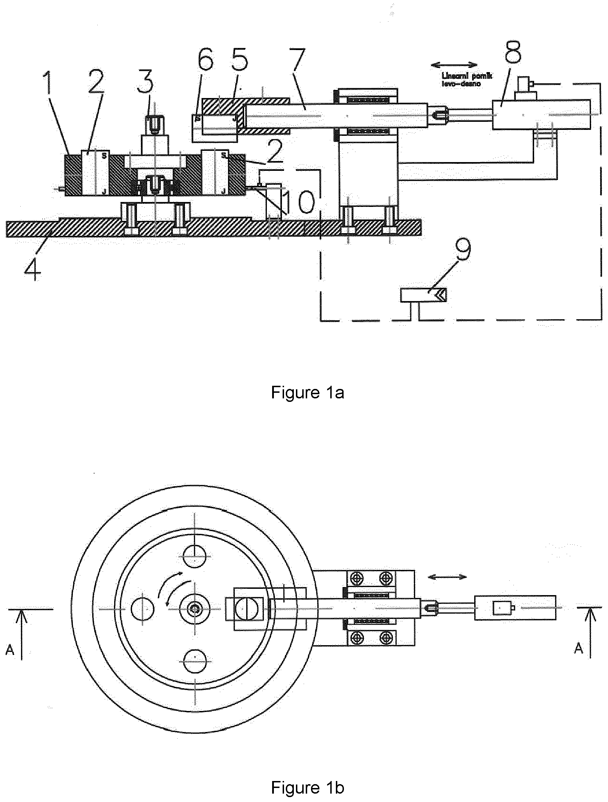

The permanent magnet 6 may have any shape, orientation N-S is central with respect to the magnet 2, as shown in figure 1a.

Initial starting energy for rotor 1 rotation is ensured with the permanent magnet 6, which is put in the position of attraction or repulsion with respect to the position of the permanent magnet 2, wherein movement of magnet 6 is achieved with an electrically powered linear motor 8. Permanent magnet 2 having north pole on the top is located left of the permanent magnet 6, therefore the magnet 6 has to be moved forwards into position south. Because the north and the south pole are attracted, the rotor rotates. When the north and south are aligned, the pole of the magnet 6 has to be changed by moving it into the right, thus achieving repulsion force and continuation of rotor rotation.

The linear motor according to embodiment II comprises:
- axle with two ends and a housing on both ends,
- wherein on one end the first holder of the first permanent magnet is provided, and on the other end the second holder of the second permanent magnet is provided,
- a console for transfer of torque to a user, and
- an encoder and a control unit having the same functions as encoder and control unit in the embodiment of rotary magnetic motor,
- two means for movement of additional movable permanent magnet, preferably two linear motors, which are connected to a holder of the additional movable permanent magnet, which can be moved towards the centre axis or away from it.

For continued operation of the motor the pole has to change by moving the movable magnet before the axis of the magnet on one end of the axle and the movable magnet are aligned, wherein both magnets are not in contact.

The movable permanent magnet preferably has the N pole directed outwards and the additional movable permanent magnet has N-S orientation, wherein the N is facing away from the linear motor for moving the movable permanent magnet. It may also be vice-versa, however, further description of the operation will be based on the preferred orientation.

The energy for movement of the additional magnet is ensured with the linear motor. Once the left side of the linear motor is close to the movable permanent magnet, said movable permanent magnet is moved into the left so that the north is closer to the magnet on the axle of the motor, which causes repulsion, while at the same time the right movable magnet is moved into position of attraction as the south is closer to the magnet on the right side of the axle of the motor. Then the cycle is repeated in the opposite direction, thus ensuring motor operation and transfer of torque via a console to a user. Operation of the motor is stopped by stopping the movement of movable permanent magnets, while speed is altered by increasing or decreasing the frequency of movement of the movable permanent magnets, which is controlled by the control unit.

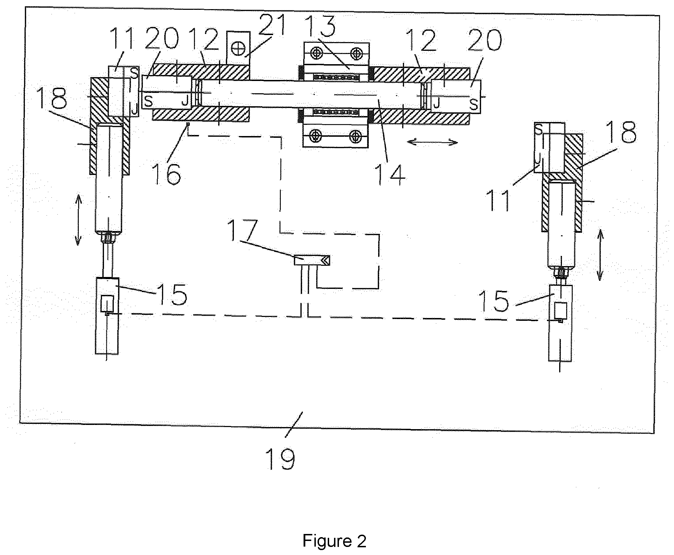

The linear magnetic motor according to a second possible embodiment is shown in figure 2 and comprises an axle 14 with a housing 13 on both ends, wherein on one end of the axle 14 a first holder 12 of the permanent magnet 20 is provided, while the other end of the axle 14 a second holder 12 of the second permanent magnet 20 is provided. The motor also has a console for transfer of torque onto a user and an encoder 16 and a regulator 17 having the same function as the sensor 10 and the control unit 9 in the rotary motor. The linear motor is further equipped with two linear motors 15, which are connected with a holder of the movable permanent magnet 11, which may be moved towards the centre of the axle 14 or away from it. The permanent magnets 10 and 20 may have any shape, while orientation N-S has to be central as shown in figure 2. The permanent magnet 20 is oriented so that the north pole is facing outwards, while the movable magnet 11 on the holder 18 has N-S orientation, wherein N is facing away from the linear motor for movement of the permanent magnet 11.

Both linear motors 15 function synchronically, so that pole change can occur in the correct moment, thus ensuring optimal operation of the linear magnetic motor in the same manner as described for the rotary motor. The process is controlled with a digital regulator 17, which based on the position of magnets 20 on the holder 12 detected by the encoder 16, changes the position of the magnet 11 thereby causing attraction or repulsion forces between the magnets 11 and 20, which affects movement of the axle 14 of the motor. The linear magnetic motor is via a console 21 connected to devices requiring linear movement or on a linear generator. The linear magnetic motor is attached to the housing as shown in figure 2.

The permanent magnet suitable for installation into any embodiment of the motor according to the invention is any known permanent magnetic material, such as permanent magnets from rare earths, solid ferrites, samarium cobalt and neodymium (Nd), iron and boron. Due to low price, solid ferrites are economically the best choice.

Motor housing, rotor housing, shaft and axis are made of a diamagnetic material.

Use of the magnetic motor in any of the described embodiments is wide, as it can be used in all machines or devices that require rotation or linear movement for their operation. These motors are reliable, have high efficiency and low operational costs. For example, the magnetic motor according to the invention can be used as a car drive, it can be installed in all four wheels or as a vehicle engine that is suitably connected to the wheels.

## Claims

1. A magnetic motor **characterized in that** orientation of permanent magnets installed in a rotor is vertical, i.e. N-S or S-N, arranged to create attraction or repulsion in presence of a horizontally oriented permanent magnet N-S or S-N; that upon change of magnetic field by moving the horizontal permanent magnet mounted in a movable holder and movable into the field of one of the vertical permanent magnets arranged in the rotor, thus causing attraction or repulsion, which allows rotation of the rotor or the axle of the motor for transfer of torque onto a user.

2. The magnetic motor according to claim 1, **characterized in that** the motor comprises:
- housing of the motor, on which a rotor and other components of the motor are mounted,
- the rotor,
- at least two vertical permanent magnets arranged on the rotor, wherein the shapes and material of the permanent magnets are arbitrary,
- at least one horizontal permanent magnet arranged on a holder, which is movable with means for movement, the latter being a linear motor, a pneumatic cylinder or any other suitable element, which is arranged to move the permanent magnet from the circumference of the rotor towards its centre and back in order to ensure repulsion and attraction forces and consequently rotor rotation,
- an absolute rotary encoder or encoder arranged on the rotor arranged to sense the position of permanent magnets in the rotor, wherein the detected positions are sent to a control unit for start, operation and stopping of the motor,
- the control unit, which comprises a suitably programmed microprocessor, which controls the movement means and thus moves the horizontal permanent magnet based on positions of permanent magnets on the rotor and at least one horizontal permanent magnet determined by the encoder,
- An axle in the centre of the rotor, which transfers the created torque onto a user in any known manner.

3. The magnetic motor according to claim 1 and claim 2, **characterized in that** a bottom part of the housing (4) is provided with a fixedly installed bearing (4a) on which circular frame (1a) of the rotor (1) is rotatably installed, said rotor (1) being provided with four cylindrically shaped permanent magnets (2) installed in four cylindrical holes equally distributed along the circumference; that in an upper part of the frame (1a) an axis (3) is installed coaxially with the bearing (4a); that on a right part of the housing (4) rectangular basis is attached in a fixed manner, wherein to said basis a holder (4b) of the bearing (4c) is mounted; that a supporting element (4b') shaped approximately as a large letter L is attached to the holder (4b) in a fixed manner; that the vertical part of the supporting element (4b') a holder of the linear motor (8) with a built-in absolute actuator (81) is mounted; that in the axis (X1) the shaft (8a) of the linear motor is connected to the shaft (7) with a joint, said shaft being installed through the linear bearing (4c), that the other end of the shaft (7) is provided with a holder (5) of the permanent magnet (6), which is above one of the permanent magnets (2) located in axis (X); that the shaft (8a) of the linear motor and the shaft (7) are in coordinate axis (X1), while the drive shaft (3) is in the coordinate axis (Y), that the absolute encoder (10) is a sensor, which is used for transformation of a controlled value into an electric signal, the latter is via a printed circuit and clamps connected to a microprocessor in the control unit (9), which is a part of the control unit (9), which is together with the absolute actuator (81) installed in the linear motor (8); and **in that** the absolute encoder (10) is installed on the housing (1a) of the rotor (2) near or adjacent to one of the magnets (2).

4. The magnetic motor according to any of the preceding claims, **characterized in that** in the housing (1a) of the rotor (1) more than four permanent magnets (2) are installed; that the magnets (2) are always in pairs and their number is 6, 8, 10, 12 or more depending on the size of the rotor (1); and **in that** all magnets (2) have orientation N-S or S-N depending on the orientation of the movable magnet (6).

5. The magnetic motor according to any of the preceding claims, **characterized in that** on the holder (5) at least one permanent magnet (6) or more are installed; and **in that** they all have to be oriented N-S or S-N, which depends on the orientation of magnets (2) in the rotor (1).

6. The magnetic motor according to any of the preceding claims, **characterized in that** means for moving the movable permanent magnet is a pneumatic cylinder or any other suitable element, preferably a linear motor powered by electric energy.

7. The magnetic motor according to any of the preceding claims, **characterized in that** the permanent magnet (2, 6) may be any suitable permanent magnetic material, such as permanent magnets from rare earths, solid ferrites, samarium cobalt and neodymium iron boron.

8. The magnetic motor according to claim 5 or claim 6, **characterized in that** orientation of magnets (2) is any, N-S or S-N, but all have the same orientation, while the additional movable permanent magnet (6) may have orientation N-S or S-N, wherein its orientation is along the centre with regards to the permanent magnets (2) on the rotor (1).

9. A linear magnetic motor, **characterized in** the that said motor comprises:
- axle (14) with two ends and a housing (13) on both ends,
- wherein on one end of the axle (14) a first holder (12) of the first permanent magnet (20) is provided, and on the other end a second holder (12) of the second permanent magnet (20) is provided,
- a console (21) for transfer of torque to a user, and
- an encoder (16) installed on the axle (14) and arranged to detect the position of permanent magnets (20), wherein detected positions are sent to a control unit (17) for controlling motor operation,
- the control unit (17), preferably suitably programmed digital regular connected so as to trigger activity of the linear motor (15) based on position of the axle (14) and the magnets (20) detected by the encoder (10), thus enabling movement of the movable permanent magnet (11), wherein the motor operation, speed and stopping is thus controlled,
- two means for movement of the movable permanent magnet (11), preferably two linear motors, which are connected to a holder (18) of the movable permanent magnet (11), which can be moved towards the centre of the axle (14) or away from it.

10. A linear magnetic motor according to claim 9, **characterized in that** the axle (14) of the motor is arranged to move towards the one of the ends of the axle (14) of the linear motor with the permanent magnet (20), to which the movable permanent magnet (11) is closer.

11. A linear magnetic motor according to claim 9 and 10, **characterized in that** control unit (17) is arranged to ensure continued operation by triggering movement of the movable permanent magnet (11) before the axis of magnets (20) on one end of the axle and the movable magnet (11) are aligned, wherein both magnets (11, 20) are not in contact.

12. A linear magnetic motor according to claim 9, 10 and 11, **characterized in that** the permanent magnet (20) has the N pole directed outwards and the additional movable permanent magnet (11) has N-S orientation, wherein the N is facing away from the linear motor (15) for moving the movable permanent magnet (11); or vice-versa.

13. A method of operation of the linear motor according to any claim from 8 to 11, **characterized in that** said method comprises the following steps:
a) a linear motor (15) ensures initial energy for movement by moving one of the movable permanent magnets (11),
b) once the left side of the linear motor is close to the movable permanent magnet (11), said movable permanent magnet (11) is moved so that the north is closer to the magnet (20) on the axle (14) of the motor, which causes repulsion, while at the same time the right movable magnet (11) is moved into position of attraction as the south is closer to the magnet (20) on the right side of the axle (14) of the motor,
c) then the cycle is repeated in the opposite direction, which ensures movement of the motor and transfer of torque via a console (21) to a user,
d) optionally, operation of the motor is stopped by terminating movement of the movable magnets (11),
wherein speed of motor operation is altered by increasing or decreasing frequency of movement of movable magnets.
